(19) Europäisches Patentamt
European Patent Office
Office européen des brevets

(11) **EP 4 163 712 A1**

(12) **EUROPEAN PATENT APPLICATION**
published in accordance with Art. 153(4) EPC

(43) Date of publication:
**12.04.2023 Bulletin 2023/15**

(21) Application number: **21817379.7**

(22) Date of filing: **24.02.2021**

(51) International Patent Classification (IPC):
**G02F 1/13357** *(2006.01)*      **G02B 27/01** *(2006.01)*

(52) Cooperative Patent Classification (CPC):
**G02B 27/0101; G02B 3/08; G02B 27/01;
G02F 1/1336;** G02B 6/0046; G02B 6/0053;
G02B 6/0068

(86) International application number:
**PCT/JP2021/006900**

(87) International publication number:
**WO 2021/246000 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.06.2020 JP 2020097744**

(71) Applicant: **Panasonic Intellectual Property
Management Co., Ltd.
Osaka-shi, Osaka 540-6207 (JP)**

(72) Inventors:
• **TOMOMATSU, Shunsuke
Chuo-ku, Osaka-shi, Osaka 540-6207 (JP)**
• **ASAI, Yosuke
Chuo-ku, Osaka-shi, Osaka 540-6207 (JP)**

(74) Representative: **Eisenführ Speiser
Patentanwälte Rechtsanwälte PartGmbB
Postfach 10 60 78
28060 Bremen (DE)**

(54) **DISPLAY DEVICE, HEAD-UP DISPLAY, AND MOBILE OBJECT**

(57)      A display device includes a display panel and a lighting device. The lighting device includes a light source, a light guide panel including an emission surface from which a light of the light source is emitted toward the display panel, and a first optical member including a prism array opposing the emission surface of the light guide panel. The prism array includes a plurality of prisms arranged in a first direction orthogonal to a normal direction of the display panel as viewed in the normal direction. The prism has such an angle that a first angle between the display panel and the light guide panel is smaller than a second angle between a light traveling toward an eye-box and the normal direction of the display panel as viewed in a second direction orthogonal to the normal direction and the first direction.

Fig.7A

EP 4 163 712 A1

**Description**

TECHNICAL FIELD

The present disclosure relates to a display device, a head-up display including the display device, and a mobile object including the head-up display.

BACKGROUND ART

Patent Document 1 discloses a head-up display that is mounted on a vehicle and includes a display device. A light (image) output from the head-up display is guided into an eye-box of an occupant (observer) through a windshield.
The display device of the head-up display described in Patent Document 1 includes a lighting device (backlight device) and a transmissive display panel (liquid crystal display panel) that displays an image. The display panel is disposed such that a normal direction of the display panel is inclined at a predetermined angle from an optical axis of the lighting device. That is, the light of the lighting device passes through the display panel with an inclination at a predetermined angle from the normal direction. This suppresses an external light such as sunlight that is reflected on the display panel traveling along an optical path along which the light of the lighting device travels to eventually arrive at the eye-box.

PRIOR ART DOCUMENT

PATENT DOCUMENT

Patent Document 1: JP 2019-101056 A

SUMMARY OF THE INVENTION

PROBLEMS TO BE SOLVED BY THE INVENTION

However, in a case of a display device of a head-up display described in Patent Document 1, the display panel is disposed so as a normal direction of the display panel to be inclined from a direction in which a light is emitted from a lighting device. Thus, a large space for disposing these components is required. This makes the size of the display device large.
In this regard, an object of the present disclosure is to reduce a space for placing a display panel and a lighting device while letting a light of the lighting device pass through the display panel in a direction inclined from a normal direction of the display panel.

MEANS FOR SOLVING THE PROBLEMS

According to one aspect of the present disclosure, provided is a display device that emits an image light toward an eye-box, the display device including:

a display panel that displays an image; and
a lighting device that emits a light toward the display panel,
in which the lighting device includes
a light source that emits a light,
a light guide panel on which a light from the light source is incident and including an emission surface that emits a light toward the display panel, and
a first optical member disposed between the display panel and the light guide panel and including an incident surface including a prism array provided on a surface opposing the emission surface of the light guide panel and an emission surface opposing the display panel,
the prism array includes a plurality of prisms arranged in a first direction orthogonal to a normal direction of the display panel as viewed in the normal direction, and
the prism has two prism angles of two prism surfaces, each of the two prism angles being an angle between the emission surface and a corresponding one of the two prism surfaces, the two prism angles being such that, as viewed in a second direction orthogonal to the normal direction and the first direction, a first angle between the display panel and the emission surface of the light guide panel is smaller than a second angle between the normal direction and a light traveling from a center of a transmissive region of the display panel toward a center of the eye-box.

According to a different aspect of the present disclosure, a head-up display including the display device described above is provided.

According to another different aspect of the present disclosure, provided is a mobile object including:

the head-up display described above; and
a windshield on which an image output from the head-up display is projected.

EFFECTS OF THE INVENTION

According to the present disclosure, a space for placing a display panel and a lighting device can be reduced while letting a light of the lighting device pass through the display panel in a direction inclined from a normal direction of the display panel.

BRIEF DESCRIPTION OF THE DRAWINGS

FIG. 1 is a schematic view of a vehicle on which a head-up display according to one embodiment of the present disclosure is mounted.
FIG. 2 is a perspective view of a display device according to one embodiment of the present disclosure.
FIG. 3 is a cross-sectional view of the display device taken along line A-A in FIG. 2.
FIG. 4 is a cross-sectional view of the display device taken along line B-B in FIG. 2.
FIG. 5 is a perspective view of a first optical member and a second optical member as viewed from a light guide panel side.
FIG. 6 is a view illustrating propagation of a light passing through a prism array.
FIG. 7A is a view illustrating propagation of a light as viewed in a lateral direction of the display panel where the display panel is inclined with respect to an emission surface of the light guide panel.
FIG. 7B is a view illustrating propagation of a light as viewed in the lateral direction of the display panel where a full width at half maximum of a light passing through the display panel is about 30 degrees.
FIG. 8A is a view illustrating propagation of a light as viewed in a longitudinal direction of the display panel where the display panel is inclined with respect to the emission surface of the light guide panel.
FIG. 8B is a view illustrating propagation of a light as viewed in the longitudinal direction of the display panel where a full width at half maximum of a light passing through the display panel is about 30 degrees.
FIG. 9 is a view illustrating comparison between the display device according to the embodiment and a display device of a comparative example.
FIG. 10 is a perspective view of a display device according to another embodiment.

MODES FOR CARRYING OUT THE INVENTION

Hereinafter, embodiments will be described in detail with reference to the drawings as appropriate. Unnecessarily detailed description may be omitted. For example, detailed description of a well-known matter and a repeated description of substantially the same configuration may be omitted. This is to avoid unnecessary redundancy of the following description and to facilitate understanding of those skilled in the art.

Note that, the inventor (inventors) provides the accompanying drawings and the following description in order for those skilled in the art to fully understand the present disclosure, and does not intend to limit the subject matter described in the claims by the accompanying drawings and the following description.

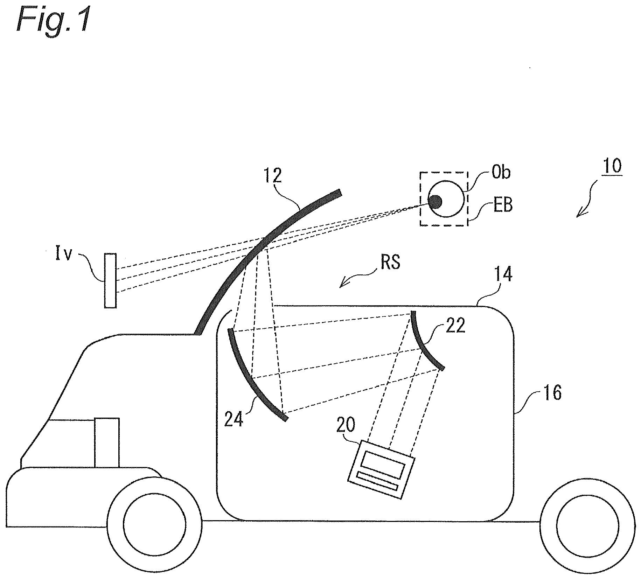

Display devices according to a plurality of embodiments of the present disclosure will be described with reference to FIGS. 1 to 7.

FIG. 1 is a schematic view of a vehicle mounted with a head-up display according to one embodiment of the present disclosure.

As illustrated in FIG. 1, a vehicle 10 is, for example, an automobile, and is mounted with a head-up display 14 that projects a light (image) onto a transparent windshield 12, that is, a front window.

A light (image) output from the head-up display 14 is guided into an eye-box EB of an observer Ob, such as a driver in the vehicle 10, via the windshield 12. This allows the observer Ob to visually recognize a virtual image Iv. That is, the observer Ob visually recognizes a scenery seen through the windshield 12 and the virtual image Iv superimposed on the scenery. The eye-box EB is a spatial region that the observer Ob can visually recognize the virtual image Iv with no portion of the virtual image Iv missing.

The head-up display 14 includes a housing 16. A display device 20 and a plurality of mirrors 22 and 24 for guiding a light (image) output from the display device 20 to the windshield 12 are provided inside the housing 16. For example, a convex mirror 22 that reflects a light output from the display device 20 and a concave mirror 24 that reflects and directs a light from the convex mirror 22 toward the windshield 12 are provided in the housing 16. The windshield 12 and a plurality of mirrors 22 and 24 constitute a reflective optical system RS that guides a light output from the display device 20 to the eye-box EB of the observer Ob. The reflective optical system RS, from the display device 20 to the eye-box EB, differs among different conditions of mounting the head-up display 14 in vehicles.

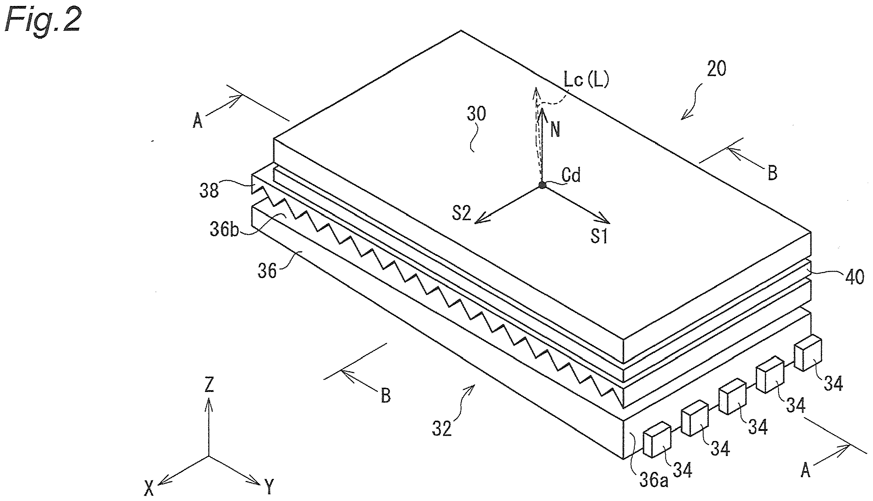

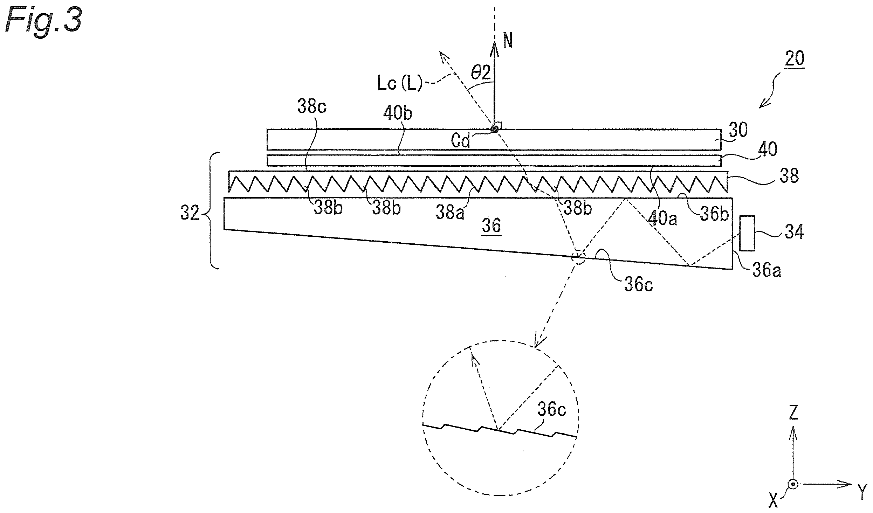

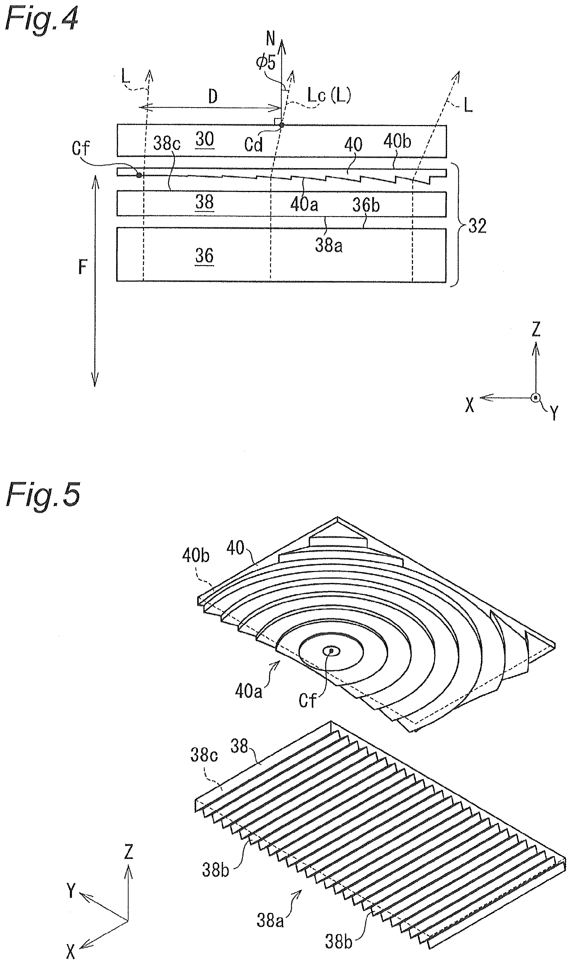

FIG. 2 is a perspective view of a display device according to one embodiment of the present disclosure. FIG. 3 is a cross-sectional view of the display device taken along line A-A in FIG. 2. FIG. 4 is a cross-sectional view of the display device taken along line B-B in FIG. 2. Note that, an X-Y-Z coordinate system in the drawings is for facilitating understanding of the present disclosure, and does not limit the present disclosure.

As illustrated in FIGS. 2 and 3, the display device 20 according to the present embodiment includes a display panel 30 that displays an image, and a lighting device 32 that emits a light toward the display panel 30.

In the present exemplary embodiment, the display panel 30 is a transmissive liquid crystal panel. In the present embodiment, the display panel 30 has a rectangular shape having a longitudinal direction S1 (Y-axis direction) and a lateral direction S2 (X-axis direction). That is, the display panel 30 displays an image having a longitudinal direction and a lateral direction.

The lighting device 32 includes a plurality of light sources 34, and a light guide panel 36 that guides a light emitted from a plurality of light sources 34 toward the display panel 30.

In the present embodiment, a plurality of light sources 34 is LEDs. The number of light sources is not limited to 5, and may be 1 to 4 or 6 or more.

The light guide panel 36 is a panel-shaped member made of a transparent material, for example, a resin material. Specifically, the light guide panel 36 includes an incident surface 36a opposing a plurality of light sources 34, an emission surface 36b opposing the display panel 30, and a reflection surface 36c opposing the emission surface 36b. In the present embodiment, the incident surface 36a is vertical to (by 85 to 95 degrees) and adjacent to the emission surface 36b.

In the present embodiment, as illustrated in FIGS. 2 and 3, each of a plurality of light sources 34 opposes the incident surface 36a of the light guide panel 36 in the longitudinal direction S1 (Y-axis direction) of the display panel 30. A plurality of light sources 34 is arranged in the lateral direction S2 (X-axis direction) of the display panel 30 along the incident surface 36a. A light emitted from each of a plurality of light sources 34 enters the light guide panel 36 via the incident surface 36a. The entering light is reflected a plurality of times on the emission surface 36b and the reflection surface 36c, and eventually emitted from the emission surface 36b.

The emission surface 36b of the light guide panel 36 is a surface opposing the display panel 30. In the present embodiment, the display panel 30 is disposed parallel to the emission surface 36b of the light guide panel 36. The light emitted from the emission surface 36b passes through the display panel 30 and eventually arrives at the eye-box EB of the observer Ob.

Furthermore, in the present embodiment, the display device 20 includes a first optical member 38 and a second optical member 40 between the display panel 30 and the light guide panel 36.

FIG. 5 is a perspective view of the first optical member and the second optical member as viewed from the light guide panel side.

In the present embodiment, as illustrated in FIG. 2, the display panel 30 emits light L (image light) not in a normal direction N (Z-axis direction) but in a direction inclined from the normal direction N. Specifically, as illustrated in FIG. 3, the display panel 30 emits light Lc in a direction inclined at an angle $\theta2$ (second angle) from the normal direction N as viewed in the lateral direction S2 (X-axis direction) of the display panel 30. At the same time, as illustrated in FIG. 4, the display panel 30 emits the light Lc in a direction inclined at an angle $\varphi5$ (fifth angle) from the normal direction N as viewed in the longitudinal direction S1 (Y-axis direction) of the display panel 30. The light Lc is a portion of entire light L travelling from the display panel 30 toward the eye-box EB and travels from a center of a transmissive region of the display panel 30 toward a center of the eye-box EB (for example, a center between two eyes of a driver sitting in a driver's seat). The "transmissive region" is a region allowing a light to pass therethrough, and where an image (picture) is formed. That is, the lighting device 32 emits the light L toward the display panel 30 at an inclination angle with respect to the normal direction N. With the inclination angle, an external light such as sunlight, reflected on the display panel 30, travelling along an optical path along which the light L of the lighting device 32 travels to eventually arrive at the eye-box EB can be suppressed.

For this reason, the lighting device 32 includes the first optical member 38 that causes the light Lc to be emitted at the second angle $\theta2$ with respect to the normal direction N of the display panel 30 as viewed in the lateral direction S2 (X-axis direction) of the display panel 30. In addition, the lighting device 32 includes the second optical member 40 that causes the light Lc to be emitted at the fifth angle $\varphi5$ with respect to the normal direction N of the display panel 30 as viewed in the longitudinal direction S1 (Y-axis direction) of the display panel 30.

The first optical member 38 is a panel-shaped member made of a transparent material, for example, a resin material. The first optical member 38 is disposed between the display panel 30 and the light guide panel 36, and the light L emitted from the emission surface 36b of the light guide panel 36 enters the first optical member 38.

Furthermore, as illustrated in FIGS. 3 and 5, the first optical member 38 is provided with a prism array 38a on a surface of the incident surface opposing the emission surface 36b of the light guide panel 36. The prism array 38a includes a plurality of prisms 38b arranged in the longitudinal direction S1 (Y-axis direction) of the display panel 30 as viewed in the normal direction N (Z-axis direction) of the display panel 30. A plurality of prisms 38b is arranged at a constant pitch that is sufficiently large with respect to a wavelength of the light L.

The light L from the emission surface 36b of the light guide panel 36 enters the first optical member 38 from the prism array 38a, and the first optical member 38 emits the light from an emission surface 38c opposing the display panel 30. The light L emitted from the first optical member 38 is emitted from the display panel 30 at the second angle θ2. The prisms 38b of the prism array 38a are optically designed so that a light can be emitted at the second angle θ2. The second angle θ2 of the light Lc travelling from a center Cd of the transmissive region of the display panel 30 toward the center of eye-box EB is required to have an absolute value satisfying $0° < |θ2| \leq 45°$.

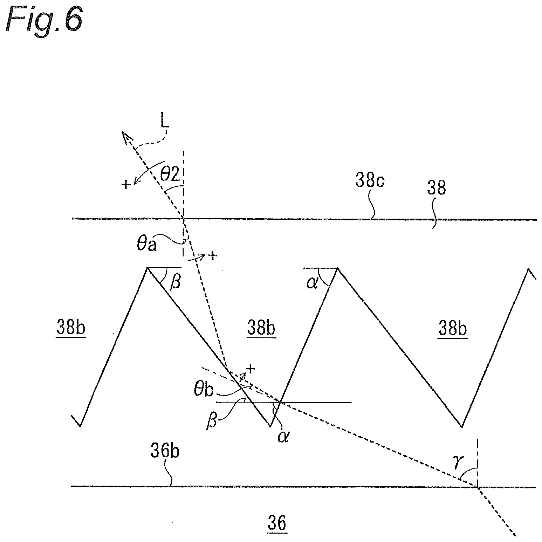

FIG. 6 is a view illustrating propagation of a light passing through the prism array.

As illustrated in FIG. 6, the prism 38b of the prism array 38a of the first optical member 38 is a so-called triangular prism. A shape of the prism 38b is designed based on an emission angle γ of the light L emitted from emission surface 36b of the light guide panel 36 and the second angle θ2 required of the light Lc that travels from the center Cd of the transmissive region of the display panel 30 toward the center of the eye-box EB.

As illustrated in FIG. 6, two angles formed between the emission surface 38c and two prism surfaces of the prism 38b are defined as α and β. The angle α is an angle that defines the inclination of the prism surface of the prism 38b on which the light L is incident. A refractive index of the prism 38b is n, an incident angle with respect to the emission surface 38c is θa, and an incident angle with respect to the prism surface between the angle α and an apex is θb. Using Snell's law for the emission surface 38c, the following Formula 1 is obtained.
[Math. 1]

$$θ2 = \sin^{-1}(n \sin θa) \qquad \cdots \text{(Formula 1)}$$

From FIG. 6, the following angular relational expression (Formula 2) is obtained.
[Math. 2]

$$θa = 180° + θb - α - 2β \qquad \cdots \text{(Formula 2)}$$

Using Snell's law for the prism surface between the angle α and the apex, the following Formula 3 is obtained.
[Math. 3]

$$θb = \sin^{-1}(1/(n \sin(α - γ))) \qquad \cdots \text{(Formula 3)}$$

Using the three Formulas 1 to 3, the shape of the prism 38b can be determined.

When the emission angle γ of the light guide panel 36 is 67 degrees, the second angle θ2 is 20 degrees, and the refractive index n of the prism 38b is 1.5, the prism 38b is designed, for example, to have the angle α of 67 degrees and the angle β of 49.9 degrees. When the second angle θ2 is -30 degrees, the prism 38b is designed, for example, to have the angle α of 55 degrees and the angle β of 68.2 degrees.

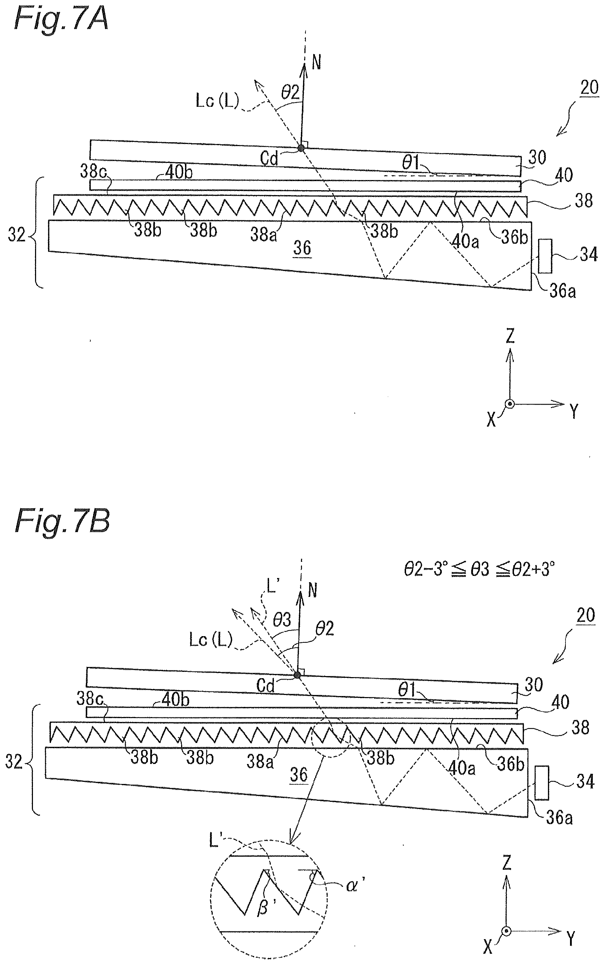

In another embodiment, as illustrated in FIG. 7A, the display panel 30 may be disposed to be inclined with respect to the emission surface 36b of the light guide panel 36 of the lighting device 32 as viewed in the lateral direction S2 of the display panel 30 (as viewed in the X-axis direction).

In the embodiment illustrated in FIG. 3, the display panel 30 is parallel to the emission surface 36b of the light guide panel 36 of the lighting device 32. That is, as viewed in the lateral direction S2 of the display panel 30 (as viewed in the X-axis direction), the first angle θ1 between the display panel 30 and the emission surface 36b of the light guide panel 36 is 0.

As in another embodiment illustrated in FIG. 7A, when the angle θ1 between the display panel 30 and the emission surface 36b of the light guide panel 36 (first angle) as viewed in the lateral direction S2 of the display panel 30 (as viewed in the X-axis direction) is not 0, the angles α and β of the prism 38b are determined so as to satisfy the following Formulas 1A to 3A.
[Math. 4]

$$\theta 2 - \theta 1 = \sin^{-1}(n \sin \theta a) \qquad \cdot \cdot \cdot \text{(Formula 1A)}$$

[Math. 5]

$$\theta a = 180° + \theta b - \alpha - 2\beta \qquad \cdot \cdot \cdot \text{(Formula 2A)}$$

[Math. 6]

$$\theta b = \sin^{-1}(1/(n \sin(\alpha - \gamma))) \qquad \cdot \cdot \cdot \text{(Formula 3A)}$$

Note that, Formulas 1 to 3 respectively correspond to Formulas 1A to 3A where $\theta 1 = 0$.

When the emission angle $\gamma$ of the light guide panel 36 is 67 degrees, the second angle $\theta 2$ is 20 degrees, the first angle $\theta 1$ between the display panel and the emission surface 36b is 5 degrees, and the refractive index n of the prism 38b is 1.5, the prism 38b is designed, for example, to have the angle $\alpha$ of 67 degrees and the angle $\beta$ of 51.5 degrees.

As illustrated in FIG. 7A, the two angles $\alpha$ and $\beta$ of the prism 38b are determined such that the first angle $\theta 1$ between the display panel 30 and the emission surface 36b of the light guide panel 36 is smaller than the second angle $\theta 2$ between the light Lc travelling from the center Cd of the transmissive region of the display panel 30 toward the center of the eye-box EB and the normal direction N of the display panel 30. The reason will be described later.

The head-up display has a feature that a full width at half maximum of a light passing through the display panel 30 is about 30 degrees. Thus, as illustrated in FIG. 7B, when an angle $\theta 3$ (third angle) of light L' that is actually emitted from the center Cd deviates by 3 degrees or more from the second angle $\theta 2$ required of the light Lc that travels from the center Cd of the transmissive region of the display panel 30 toward the center of the eye-box EB as viewed in the lateral direction S2 (X-axis direction) of the display panel 30, the luminance at the center of the eye-box EB varies. Thus, the third angle $\theta 3$ is preferably in a range of $\pm 3$ degrees from the second angle $\theta 2$. Note that, like the second angle $\theta 2$, the third angle $\theta 3$ is an angle from the normal direction N.

This means that each of the two angles of the prism 38b may take not a single value, that is, may take values within an appropriate range. That is, the two angles of the prism 38b may each take values within an appropriate range of which center value is $\alpha$ for the second angle $\theta 2$ and $\beta$ for the third angle $\theta 3$ where these angles $\alpha$ and $\beta$ are of a case when the second angle $\theta 2$ and the third angle $\theta 3$ are equal.

For example, when the required second angle $\theta 2$ is 20 degrees and the refractive index n of the prism 38b is 1.5, the prism 38b may have, for example, the angle $\alpha$ of 67 degrees and the angle $\beta$ of 50.9 degrees so that the display panel 30 emits the light L' at the third angle $\theta 3$ of 17 degrees. Alternatively, the prism 38b may have the angle $\alpha$ of 67 degrees and the angle $\beta$ of 48.9 so that the display panel 30 emits the light L' at the third angle $\theta 3$ of 23 degrees.

With this in consideration, the two angles $\alpha$ and $\beta$ of the prism 38b satisfying the following Formulas 1B to 3B and Formula 4 are determined.

[Math. 7]

$$\theta 3 - \theta 1 = \sin^{-1}(n \sin \theta a) \qquad \cdot \cdot \cdot \text{(Formula 1B)}$$

[Math. 8]

$$\theta a = 180° + \theta b - \alpha - 2\beta \qquad \cdot \cdot \cdot \text{(Formula 2B)}$$

[Math. 9]

$$\theta b = \sin^{-1}(1/(n \sin(\alpha - \gamma))) \qquad \cdot \cdot \cdot \text{(Formula 3B)}$$

[Math. 10]

$$\theta 2 - 3° \leq \theta 3 \leq \theta 2 + 3° \qquad \cdot \cdot \cdot \text{(Formula 4)}$$

Returning back to FIG. 4, the second optical member 40 is a panel-shaped member made of a transparent material, for example, a resin material. The second optical member 40 is disposed between the display panel 30 and the first optical member 38, and the light L emitted from the first optical member 38 enters the second optical member 40.

Furthermore, as illustrated in FIGS. 4 and 5, the second optical member 40 is provided with a Fresnel lens 40a on a surface opposing the emission surface 36b of the light guide panel 36 via the first optical member 38.

In the present embodiment, a center Cf of the Fresnel lens 40a is shifted from the center Cd of the transmissive region of display panel 30 as viewed in the normal direction N of the display panel 30 (as viewed in the Z-axis direction). Specifically, the center Cf of the Fresnel lens 40a is shifted from the center Cd of the display panel 30 by a shift amount D in the lateral direction S2 (X-axis direction) of display panel 30. Due to such shift of the center, the second optical member 40 emits the light L in a direction inclined at the fifth angle $\varphi 5$ from the normal direction N from the emission surface 40b of the second optical member 40 as viewed in the longitudinal direction S1 (Y-axis direction) of the display panel 30. Precisely, the second optical member 40 emits the light Lc travelling from the center Cd of the transmissive region of the display panel 30 toward the center of the eye-box EB at the fifth angle $\varphi 5$ with respect to the normal direction N.

In the present embodiment, the center Cf of a circle of the Fresnel lens 40a is shifted from the center of the shape of the second optical member 40 as viewed in the normal direction N of the display panel 30 (as viewed in the Z-axis direction). As illustrated in FIG. 5, the center Cf of the Fresnel lens 40a may be located on the second optical member 40, or alternatively, located outside the second optical member 40.

The Fresnel lens 40a is optically designed based on the fifth angle $\varphi 5$ that is required to let a light travel from the center Cd of the transmissive region of the display panel 30 toward the center of eye-box EB and a focal length F of the Fresnel lens. Specifically, the shift amount D (central shift amount) between the center Cf of the Fresnel lens 40a and the center Cd of the display panel 30 is determined.

The relationship among the fifth angle $\varphi 5$, the central shift amount D, and the focal length F can be expressed by the following Formula 5.

[Math. 11]

$$\phi 5 = 90° - \tan^{-1}(F/D) \quad \cdot \cdot \cdot \quad (\text{Formula 5})$$

When the fifth angle $\varphi 5$ required to let a light travel from the center Cd of the transmissive region of the display panel 30 toward the center of the eye-box EB is 5 degrees and the focal length F is 200 mm, for example, the central shift amount D is 17.5 mm.

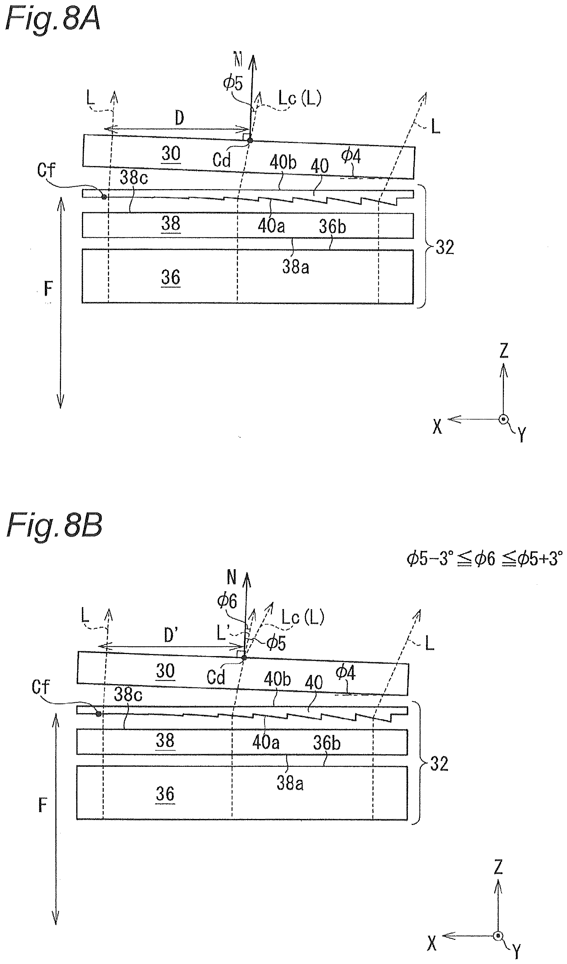

In another embodiment, as illustrated in FIG. 8A, the display panel 30 may be disposed to be inclined with respect to the emission surface 36b of the light guide panel 36 of the lighting device 32 as viewed in the longitudinal direction S1 of the display panel 30 (as viewed in the Y-axis direction).

In the embodiment illustrated in FIG. 4, the display panel 30 is parallel to the emission surface 36b of the light guide panel 36 of the lighting device 32. That is, as viewed in the longitudinal direction S1 of the display panel 30 (as viewed in the Y-axis direction), an angle $\varphi 4$ between the display panel 30 and the emission surface 36b of the light guide panel 36 (fourth angle) is 0.

As in another embodiment illustrated in FIG. 8A, when the fourth angle $\varphi 4$ between the display panel 30 and the emission surface 36b of the light guide panel 36 as viewed in the longitudinal direction S1 of the display panel 30 (as viewed in the Y-axis direction) is not 0, Formula 5 expressed above is substituted by Formula 5A expressed below.

[Math. 12]

$$\phi 5 - \phi 4 = 90° - \tan^{-1}(F/D) \quad \cdot \cdot \cdot \quad (\text{Formula 5A})$$

Note that, Formula 5 corresponds to Formula 5A where $\varphi 4 = 0$.

When the required fifth angle $\varphi 5$ is 5 degrees, the fourth angle $\varphi 4$ between the display panel and the emission surface 36b is 1 degree, and the focal length F is 200 mm, the central shift amount D is 13.4 mm.

As illustrated in FIG. 8A, the center Cd of the transmissive region of the display panel 30 is shifted from the center Cf of the Fresnel lens 40a such that the fourth angle $\varphi 4$ between the display panel 30 and the emission surface 36b of the light guide panel 36 is smaller than the fifth angle $\varphi 5$ between the light Lc travelling from the center Cd of the transmissive region of the display panel 30 toward the center of the eye-box EB and the normal direction N of the display panel 30. The reason will be described later.

Note that, the head-up display has a feature that a full width at half maximum of a light passing through the display panel 30 is about 30 degrees. Thus, as illustrated in FIG. 8B, when an angle $\varphi 6$ (sixth angle) of the light L' that is actually emitted from the center Cd deviates by 3 degrees or more from the fifth angle $\varphi 5$ required to let a light travel from the center Cd of the transmissive region of the display panel 30 toward the center of the eye-box EB, as viewed in the longitudinal direction S1 (Y-axis direction) of the display panel 30, the luminance at the center of the eye-box EB changes. Thus, the sixth angle φ6 is preferably in a range of ±3 degrees from the fifth angle φ5. Note that, like the fifth angle φ5, the sixth angle φ6 is an angle with respect to the normal direction N.

This means that the central shift amount may take not a single value, that is, may take values within an appropriate range. That is, the central shift amount may take a value within an appropriate range of which center is the central shift amount D of a case where the fifth angle φ5 and the sixth angle φ6 are equal.

For example, when the required fifth angle φ5 is 5 degrees and the focal length F is 200 mm, the central shift amount may be 6.7 mm so that the display panel 30 emits the light L at the sixth angle φ6 of 2 degrees. Alternatively, the central shift amount may be 28.1 mm so that the display panel 30 emits the light L at the sixth angle φ6 of 8 degrees.

With this in consideration, the central shift amount D that satisfies the following Formula 5B and Formula 6 is determined.

[Math. 13]

$$\phi 6 - \phi 4 = 90° - \tan^{-1}(\mathrm{F}/\mathrm{D}) \quad \cdot \cdot \cdot \quad (\text{Formula } 5\text{B})$$

[Math. 14]

$$\phi 5 - 3° \leq \phi 6 \leq \phi 5 + 3° \quad \cdot \cdot \cdot \quad (\text{Formula } 6)$$

According to the embodiments described above, a space for placing the display panel 30 and the lighting device 32 can be reduced while allowing the light Lc of the lighting device 32 to pass through the display panel 30 in a direction inclined from the normal direction of the display panel 30.

This will be specifically described.

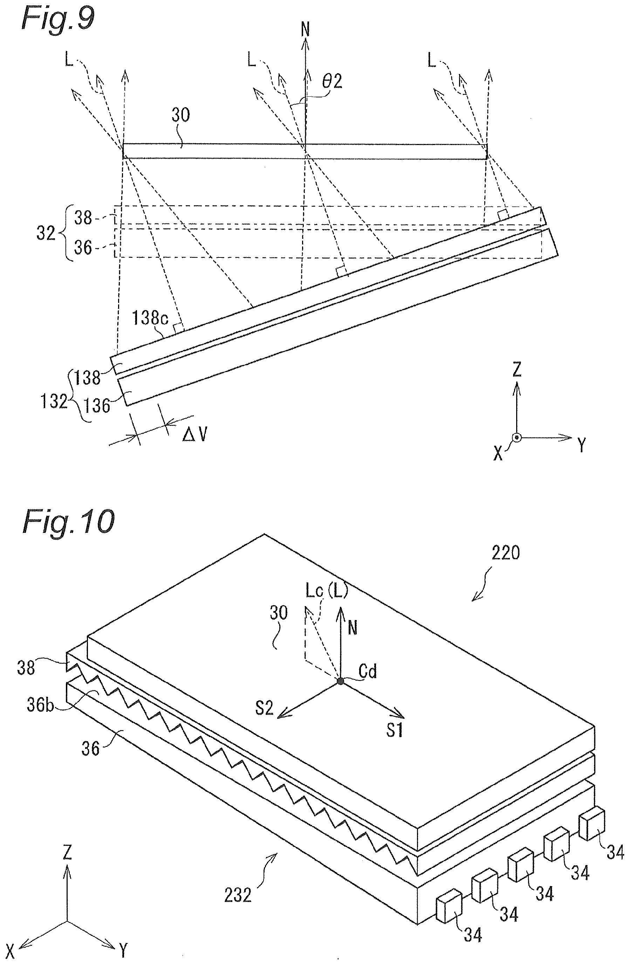

FIG. 9 is a view illustrating a comparison between the display device according to the embodiment and a display device of a comparative example.

As illustrated in FIG. 9, the lighting device 132 of the display device of the comparative example is configured to emit light L in a normal direction of an emission surface 138c of a first optical member 138. In this case, to emit light Lc from the display panel 30 at a second angle θ2, an emitting direction of the lighting device 132 needs to be inclined from the normal direction of the display panel 30. That is, an angle between the display panel 30 and an emission surface of a light guide panel 136 of the comparative example is equal to the second angle θ2. The angle of the comparative example corresponds to the first angle θ1 (smaller than the second angle θ2) of the embodiment. Accordingly, for a larger second angle θ2, a larger space is necessary for placing the display panel 30 and the lighting device 132 like the display device of the comparative example in FIG. 9 (as compared with a space for placing the lighting device 32 and the display panel 30 of the present embodiment indicated by two-dot chain lines).

As illustrated in FIG. 9, the light L emitted from places on the display panel 30 needs to be diffused. Accordingly, the lighting device 132 of the comparative example has a size larger than the lighting device 32 of the present embodiment by ΔV. Thus, the display device of the comparative example needs a further larger space for placing the display panel 30 and the lighting device 132.

When the display device of the comparative example including the lighting device 132 emits the light L in a direction inclined from the normal direction of the display panel 30 in the longitudinal direction S1 (Y-axis direction) and the lateral direction S2 (X-axis direction) of the display panel 30 (when the light is emitted at the second angle θ2 and the fifth angle φ5), a further larger space is required for placing the display panel 30 and the lighting device 132.

Thus, to let the display panel emit a light in a direction inclined from a normal direction of the display panel, the present embodiment has an entire lighting device placed substantially parallel to the display panel, unlike the comparative example that has an entire lighting device inclined with respect to the display panel. That is, the first angle θ1 illustrated in FIG. 7A is smaller than the second angle θ2, and similarly, the fourth angle φ4 illustrated in FIG. 8A is smaller than the fifth angle φ5. Accordingly, in the present embodiment, the space for placing the display panel and the lighting device is smaller than that of the comparative example.

The present disclosure has been described with reference to the embodiment described above. However, the exemplary embodiment of the present disclosure is not limited to this configuration.

FIG. 10 is a perspective view of a display device according to another embodiment.

As illustrated in FIG. 10, a display device 220 according to another exemplary embodiment is, unlike the embodiment described above and illustrated in FIG. 2, configured to output light L in a direction inclined only in a longitudinal direction S1 (Y-axis direction) of a display panel 30 from a normal direction N of the display panel 30. Thus, a lighting device 232 includes a plurality of light sources 34, a light guide panel 36, and a first optical member 38 but does not include a second optical member 40.

A display device according to further another embodiment may be configured to output light L in a direction inclined only in a lateral direction S2 (X-axis direction) of a display panel 30 from a normal direction N of the display panel 30.

As described above, the display panel 30 is disposed in parallel to or inclined with respect to the emission surface 36b of the light guide panel 36. For an inclined case, the entire lighting device 32 is inclined with respect to the display panel 30, and in addition, the first optical member 38 and/or the second optical member 40 of the lighting device 32 causes a light to incline, so that the light is emitted from the display panel 30 in a direction inclined at a required second and/or fifth angle from the normal direction N. Also in this case, a space for placing the display panel and the lighting device is smaller than when the required second and/or fifth angle is created only by inclining the entire lighting device with respect to the display panel. That is, the space for placing the display panel and the lighting device is reduced when the first angle $\theta1$ is made smaller than the second angle $\theta2$ as illustrated in FIG. 7A and/or the fourth angle $\varphi4$ is made smaller than fifth angle $\varphi5$ as illustrated in FIG. 8A.

Furthermore, in the embodiment described above, the first optical member 38 creates the second angle $\theta2$ as illustrated in FIG. 3 and the second optical member 40 creates the fifth angle $\varphi5$ as illustrated in FIG. 4. However, the embodiment of the present disclosure is not limited to such configuration. The second angle $\theta2$ may be created by the first optical member 38 and the second optical member 40. In this case, the center Cd of the transmissive region of the display panel 30 and the center Cf of a circle of the Fresnel lens 40a are shifted from each other in the longitudinal direction S1 (Y-axis direction) and the lateral direction S2 (X-axis direction) of the display panel 30. Note that, the center Cd of the transmissive region of the display panel 30 and the center Cf of the Fresnel lens 40a may be shifted from each other only in the longitudinal direction of the display panel 30 (in this case, the fifth angle $\varphi5$ is zero).

Furthermore, in the embodiment described above, a plurality of light sources 34 is arranged in the lateral direction S2 (X-axis direction) of the display panel 30. However, the embodiment of the present disclosure is not limited to such configuration. A plurality of light sources 34 may be arranged in the longitudinal direction S1 (Y-axis direction) of the display panel 30. In this case, a plurality of prisms of a prism array is arranged in the lateral direction S2 (X-axis direction) of the display panel 30.

Furthermore, in the embodiment described above, as illustrated in FIG. 1, the head-up display 14 is mounted on the vehicle 10 such as an automobile. However, a mobile object on which the head-up display is mounted is not limited to a vehicle. The mobile object may be a vehicle in which a person rides, for example, an airplane or a ship. The mobile object may be a drone. The mobile object may not be a travelling one but may be a one that operates (for example, vibrate) on the spot.

As described above, a plurality of embodiments has been described as examples of techniques of the present disclosure. For this purpose, the accompanying drawings and the detailed description have been provided.

Thus, the components described in the accompanying drawings and the detailed description may include not only components essential for solving the problem but also components that are not essential for solving the problem in order to illustrate the technique. Accordingly, it should not be immediately recognized that these non-essential components are essential because these non-essential components are described in the accompanying drawings and the detailed description.

In addition, the embodiment is described above to illustrate the technique of the present disclosure, so that various changes, replacements, additions, omissions, and the like can be made for the embodiment within the scope of the claims and equivalents thereof.

INDUSTRIAL APPLICABILITY

The present disclosure is applicable to a display device. The present disclosure is also applicable to a head-up display.

**Claims**

1. A display device that emits an image light toward an eye-box of an observer, the display device comprising:

     a display panel that displays an image; and
     a lighting device that emits a light toward the display panel,
     wherein the lighting device includes
     a light source that emits a light,
     a light guide panel on which a light from the light source is incident and including an emission surface that emits a light toward the display panel, and

a first optical member disposed between the display panel and the light guide panel and including an incident surface including a prism array provided on a surface opposing the emission surface of the light guide panel and an emission surface opposing the display panel,

the prism array includes a plurality of prisms arranged in a first direction orthogonal to a normal direction of the display panel as viewed in the normal direction, and

the prism has two prism angles of two prism surfaces, each of the two prism angles being an angle between the emission surface and a corresponding one of the two prism surfaces, the two prism angles being such that, as viewed in a second direction orthogonal to the normal direction and the first direction, a first angle between the display panel and the emission surface of the light guide panel is smaller than a second angle between the normal direction and a light traveling from a center of a transmissive region of the display panel toward a center of the eye-box.

2. The display device according to claim 1, wherein as viewed in the second direction, when an emission angle of the light guide panel is $\gamma$, the first angle is $\theta 1$, the second angle is $\theta 2$, one of the two prism angles defining an inclination of a prism surface of the prism on which a light from the light guide panel is incident is $\alpha$, another one of the two prism angles is $\beta$, a third angle of a light emitted from the center of the transmissive region of the display panel with respect to the normal direction is $\theta 3$, and a refractive index of the prism is n, following Formulas 1 to 4.

[Math. 1]

$$\theta 3 - \theta 1 = \sin^{-1}(n \sin \theta a) \quad \cdot \cdot \cdot \quad (\text{Formula } 1)$$

[Math. 2]

$$\theta a = 180° + \theta b - \alpha - 2\beta \quad \cdot \cdot \cdot \quad (\text{Formula } 2)$$

[Math. 3]

$$\theta b = \sin^{-1}(1/n \sin(\alpha - \gamma)) \quad \cdot \cdot \cdot \quad (\text{Formula } 3)$$

[Math. 4]

$$\theta 2 - 3° \leq \theta 3 \leq \theta 2 + 3° \quad \cdot \cdot \cdot \quad (\text{Formula } 4)$$

3. The display device according to claim 2, wherein the second angle $\theta 2$ and the third angle $\theta 3$ are equal.

4. The display device according to any one of claims 1 to 3, wherein

the lighting device further includes a second optical member disposed between the display panel and the first optical member, provided with a Fresnel lens on a surface opposing the emission surface of the first optical member, and including an emission surface opposing the display panel, and

the center of the transmissive region of the display panel and a center of the Fresnel lens are shifted from each other in at least one of the first direction and the second direction as viewed in the normal direction.

5. The display device according to claim 4, wherein the center of the transmissive region of the display panel is shifted from the center of the Fresnel lens in the second direction such that, as viewed in the first direction, a fourth angle between the display panel and the emission surface of the light guide panel is smaller than a fifth angle between a light travelling from the center of the transmissive region of the display panel toward the center of the eye-box and the normal direction of the display panel.

6. The display device according to claim 5, wherein when, as viewed in the first direction, the fourth angle is $\varphi 4$, the fifth angle is $\varphi 5$, a sixth inclination angle of a light emitted from the center of the transmissive region of the display panel with respect to the normal direction is $\varphi 6$, a focal length of the Fresnel lens is F, and a shift amount between the center of the transmissive region of the display panel and the center of the Fresnel lens is D, following Formulas 5 and 6.

[Math. 5]

$$\phi 6 - \phi 4 = 90° - \tan^{-1}(F/D) \quad \cdots \quad (\text{Formula } 5)$$

[Math. 6]

$$\phi 5 - 3° \leq \phi 6 \leq \phi 5 + 3° \quad \cdots \quad (\text{Formula } 6)$$

7. The display device according to claim 6, wherein the fifth angle φ5 and the sixth angle φ6 are equal.

8. The display device according to any one of claims 1 to 7, wherein the display panel is disposed parallel to the emission surface of the light guide panel.

9. A head-up display comprising the display device according to any one of claims 1 to 8.

10. A mobile object comprising:

   the head-up display according to claim 9; and
   a windshield on which an image output from the head-up display is projected.

Fig.1

*Fig.2*

EP 4 163 712 A1

Fig.3

20

30
40
38

34
36a
36b
40a
36c
38b
38a
36
38b
38b
38c
40b
Lc (L)
N
θ2
Cd
32

36c
36c

Z  Y  X

*Fig.4*

*Fig.5*

*Fig.6*

*Fig.7A*

*Fig.7B*

$$\theta2-3° \leqq \theta3 \leqq \theta2+3°$$

*Fig.8A*

*Fig.8B*

$$\phi5-3° \leqq \phi6 \leqq \phi5+3°$$

*Fig.9*

*Fig.10*

## INTERNATIONAL SEARCH REPORT

International application No.

PCT/JP2021/006900

### A. CLASSIFICATION OF SUBJECT MATTER
Int.Cl. G02F1/13357(2006.01)i, G02B27/01(2006.01)i
FI: G02F1/13357, G02B27/01

According to International Patent Classification (IPC) or to both national classification and IPC

### B. FIELDS SEARCHED

Minimum documentation searched (classification system followed by classification symbols)
Int.Cl. G02F1/13357, G02B27/00-30/60, F21S2/00, F21V8/00, G02B5/00-5/136

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)
Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X <br> Y | WO 2017/094209 A1 (PANASONIC INTELLECTUAL PROPERTY MANAGEMENT CO., LTD.) 08 June 2017 (2017-06-08), paragraphs [0010]-[0052], fig. 1, 3 | 1-3, 8-10 <br> 4, 8-10 |
| Y | WO 2018/088342 A1 (SHARP CORPORATION) 17 May 2018 (2018-05-17), paragraphs [0020]-[0046], [0056]-[0061], fig. 11-14 | 4, 8-10 |
| A | WO 2007/100458 A1 (3M INNOVATIVE PROPERTIES COMPANY) 07 September 2007 (2007-09-07), entire text, fig. 3-6 | 1-10 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April 2021 | 18 May 2021 |

| Name and mailing address of the ISA/ | Authorized officer |
|---|---|
| Japan Patent Office <br> 3-4-3, Kasumigaseki, Chiyoda-ku, <br> Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/006900

| | | |
|---|---|---|
| WO 2017/094209 A1 | 08 June 2017 | US 2018/0259773 A1<br>paragraphs [0021]-[0063], fig. 1, 3<br>EP 3379321 A1 |
| WO 2018/088342 A1 | 17 May 2018 | US 2019/0285790 A1<br>paragraphs [0036]-[0062], [0072]-[0077], fig. 11-14<br>CN 109923463 A |
| WO 2007/100458 A1 | 07 September 2007 | KR 10-2007-0090662 A<br>TW 200745654 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019101056 A